# EUROPEAN PATENT APPLICATION

(11) **EP 4 670 866 A1**
(43) Date of publication of application: **31.12.2025**
(21) Application number: 24819441.7
(22) Date of filing: 15.01.2024
(51) Int. Cl.: B21D 22/04, B21D 43/18, B21D 37/08, H01M 50/102

(54) **MOLDING DEVICE, MOLDING SYSTEM, AND MOLDING METHOD**

(30) Priority: 09.06.2023 KR 20230074430
(71) Applicant: LG Energy Solution, Ltd., Seoul 07335 (KR)
(72) Inventor: GWAK, Myeong Jun, Daejeon 34122 (KR)
(74) Representative: Plasseraud IP
(86) International application number: PCT/KR2024/000711
(87) International publication number: WO 2024/253287

(57) **Abstract**

A forming apparatus according to the present invention includes a die having a top surface provided to press an object to be pressed, a stripper disposed to face the die so as to press the object to be pressed, and a punch provided inside the stripper to press the object to be pressed, wherein the die includes a protrusion disposed at the innermost side of the top surface that presses the object to be pressed.

## Description

### TECHNICAL FIELD

The present application claims the benefit of the priority of Korean Patent Application No. 10-2023-0074430, filed on June 9, 2023, which is hereby incorporated by reference in its entirety.

The present invention relates to a forming apparatus, a forming system, and a forming method, and more particularly, to an apparatus for pressing an object to be pressed, a forming system, and a forming method.

### BACKGROUND ART

In recent years, the price of energy sources increases due to the depletion of fossil fuels, the interest in environmental pollution is amplified, and the demand for eco-friendly alternative energy sources is becoming an indispensable factor for future life. Accordingly, studies on various power generation technologies such as solar power, wind power, and tidal power are continuing, and power storage devices such as batteries for more efficiently using the generated electrical energy are also of great interest.

Furthermore, as technology development and demand for electronic mobile devices and electric vehicles using batteries increase, the demands for batteries as energy sources are rapidly increasing. Thus, many studies on batteries which are capable of meeting various demands have been conducted.

Batteries are receiving a lot of attention as an energy source in a variety of products such as mobile devices and electric vehicles. Particularly, secondary batteries are an excellent energy resource, which is capable of replacing the use of existing products using fossil fuels, and are attracting attention as an eco-friendly energy source because the secondary batteries do not generate by-products due to the energy use.

Secondary batteries have attracted considerable attention as power sources for electric vehicles (EVs), hybrid electric vehicles (HEVs), and plug-in hybrid electric vehicles (PHEVs), which have been developed to solve limitations, such as air pollution, caused by existing gasoline and diesel vehicles that use fossil fuels. In other words, the secondary batteries are used in the form of a battery pack including a plurality of battery modules.

In general, a pouch-type battery case is manufactured by performing press processing on a pouch film to form a cup part. In addition, when the cup part is formed, an electrode assembly is accommodated in the cup part, and then, a side of the cup part is sealed to manufacture a secondary battery.

According to the related art, in a forming process of the pouch case, a punch press is performed in a state in which a punch is fixed through a die and a stripper to perform the forming. Here, since the forming is performed as the punch is in contact with the pouch, stretching is mainly performed at a corner and a corner edge of the punch, resulting in a low residual rate at the corresponding portions. If the residual ratio is low, cracks may occur to cause electrolyte leakage, and insulation resistance may decrease.

### DISCLOSURE OF THE INVENTION

### TECHNICAL PROBLEM

The present invention has been invented to solve the above problems, and an object of the present invention is to provide a forming apparatus, in which an object to be pressed is pressed to be divided into primary and secondary processes to improve a residual rate at a stretched portion of the object to be pressed, a forming system, and a forming method.

### TECHNICAL SOLUTION

A forming apparatus according to an embodiment of the present invention may include: a die having a top surface provided to press an object to be pressed; a stripper disposed to face the die so as to press the object to be pressed; and
a punch provided toward the inner side than the stripper to press the object to be pressed, wherein the die may include a protrusion disposed at the innermost side of the top surface that presses the object to be pressed.

The stripper may be formed with a recess at a portion corresponding to the protrusion.

The recess may be opened to the inside of the stripper.

A through-hole passing through the protrusion and maintained in a low-pressure state so that the object to be pressed is tightly attached may be defined in the die.

The through-hole may be provided in plurality along a circumferential direction of the top surface of the die.

The protrusion may be disposed along a circumferential direction of the top surface of the die.

The punch may be disposed toward the inner side than the protrusion to press the object to be pressed.

The forming apparatus may further include a driving part configured to transmit force to the die so that the die moves vertically.

A forming system according to another embodiment of the present invention may include a first forming apparatus and a second forming apparatus, which are configured to press an object to be pressed, wherein the first forming apparatus may include: a first die provided to press the object to be pressed; a first stripper disposed to face the first die so as to press the object to be pressed; and a first punch disposed toward the inner side than the first stripper to press the object to be pressed, wherein the first die may include a protrusion disposed at the innermost side of a top surface of the first die, and the second forming apparatus may include: a second stripper and a second die, which are configured to press the object to be pressed; and a second punch configured to additionally press the object to be pressed, which is pressed in the first forming apparatus.

The first stripper may include a recess defined in a portion corresponding to the protrusion.

A through-hole that is maintained in a low-pressure state so that the object to be pressed is tightly attached to the first die may be defined in the protrusion.

A top surface of the second die may be provided to be flat, and a bottom surface of the second stripper, which faces the second die, may be provided to be flat.

A through-hole that is maintained in a low-pressure state so that the object to be pressed is tightly attached to the die may be defined in the protrusion.

A forming method according to another embodiment of the present invention may include: fixing an object to be pressed by a first die and a first stripper; and pressing the object to be pressed by a first punch, wherein the first die may include a protrusion formed at the innermost side of a top surface, and the first stripper comprises a recess formed in a portion corresponding to the protrusion.

The forming method may further include: disposing and fixing the pressed object between a second die and a second stripper; and additionally pressing the object to be pressed by a second punch.

### ADVANTAGEOUS EFFECTS

The forming apparatus, the forming system, and the forming method according to the present invention may perform the primary and secondary forming. Since the object to be pressed is pressed to be divided into the two processes, the stretched portions may also be dispersed. Since the stretched portion is dispersed, the residual rate of the object to be pressed, which remains after being pressed may increase. Since the residual rate of the object to be pressed increases, it may have the effect of enabling the deeper forming compared to the conventional method.

### BRIEF DESCRIPTION OF THE DRAWINGS

The following drawings attached in this specification illustrate a preferred embodiment of the present invention and function to make further understood the technical spirit of the present invention along with the detailed description of the invention, and thus, the present invention should not be construed as being limited to only the drawings.
FIG. 1 is a schematic view of a forming apparatus according to Embodiment 1 of the present invention.
FIG. 2 is a plan view of a die illustrated in FIG. 1.
FIG. 3 is a schematic view illustrating a state in which an object to be pressed is pressed by a punch illustrated in FIG. 1.
FIG. 4 is a schematic view illustrating a second forming apparatus of a forming system according to Embodiment 2 of the present invention.
FIG. 5 is a schematic view illustrating a state in which an object to be pressed is pressed by a second punch.
FIG. 6 is a flowchart illustrating a forming method according to Embodiment 3 of the present invention.

### MODE FOR CARRYING OUT THE INVENTION

Hereinafter, preferred embodiments of the present invention will be described in detail with reference to the accompanying drawings so that those of ordinary skill in the art may easily carry out the present invention. However, the present invention may be implemented in several different forms and is not limited or restricted by the following examples.

In order to clearly explain the present invention, detailed descriptions of portions that are irrelevant to the description or related known technologies that may unnecessarily obscure the gist of the present invention have been omitted, and in the present specification, reference symbols are added to components in each drawing. In this case, the same or similar reference numerals are assigned to the same or similar elements throughout the specification.

Also, terms or words used in this specification and claims should not be restrictively interpreted as ordinary meanings or dictionary-based meanings, but should be interpreted as meanings and concepts conforming to the scope of the present invention on the basis of the principle that an inventor may properly define the concept of a term to describe and explain his or her invention in the best ways.

### Embodiment 1

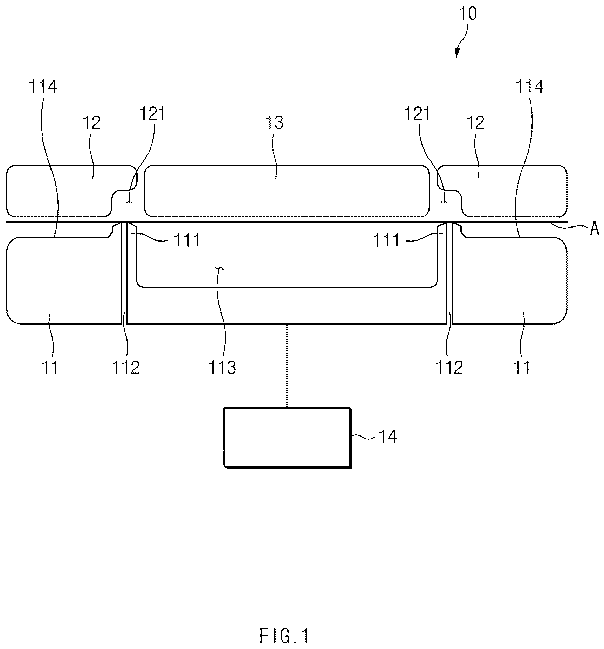

Hereinafter, a forming apparatus 10 according to Embodiment 1 of the present invention will be described in detail with reference to FIGS. 1 to 3.

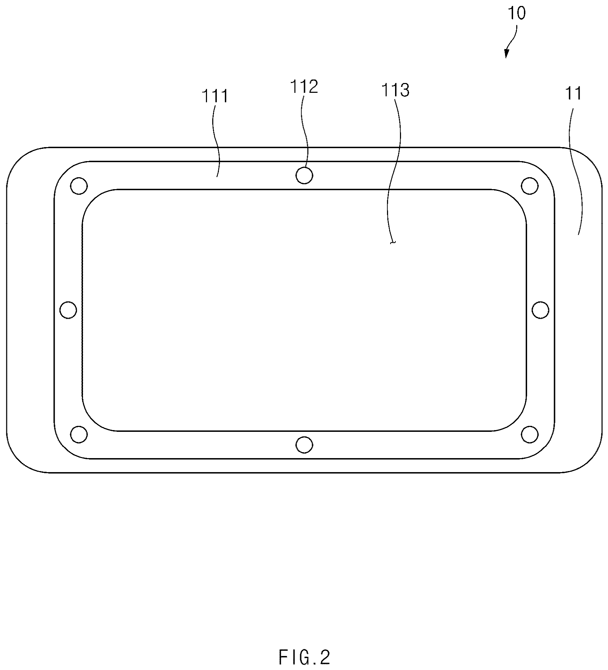

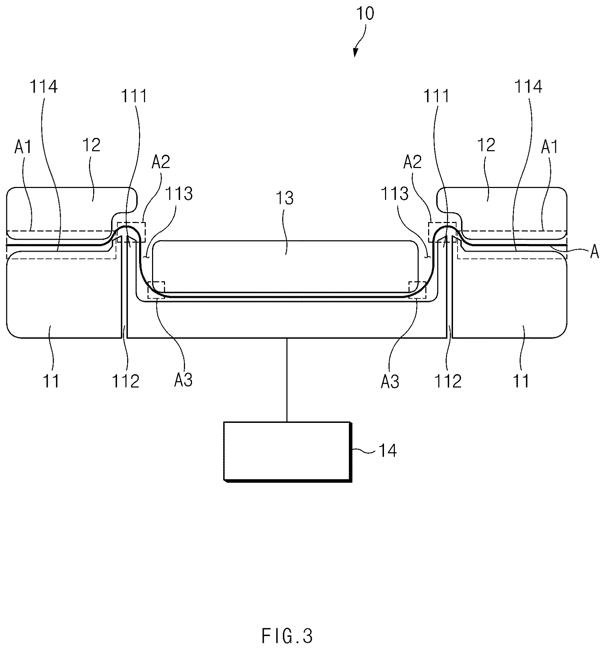

FIG. 1 is a schematic view of a forming apparatus according to Embodiment 1 of the present invention, FIG. 2 is a plan view of a die illustrated in FIG. 1, and FIG. 3 is a schematic view illustrating a state in which an object to be pressed is pressed by a punch illustrated in FIG. 1.

Referring to FIGS. 1 to 3, the forming apparatus 10 may press an object A to be pressed (hereinafter, referred to as a pressed object). The forming apparatus 10 may include a die 11, a stripper 12, and a punch 13.

The die 11 may fix the pressed object A together with the stripper 12, which will be described later. The die 11 may press the pressed object A. The die 11 may be provided with a top surface 114 that is provided to press the pressed object A. The die 11 may include a protrusion 111 on the top surface 114. The die 11 may include the protrusion 111 at the innermost side of the top surface 114. In the forming apparatus 10, the die 11 and the stripper 12, which will be described later, may be disposed at the outermost side, and the punch 13 may be disposed toward the inner side than the stripper 12.

The protrusion 111 may be disposed along a circumferential direction of the top surface 114 of the die 11. A through-hole 112 may be defined in the protrusion 111. The pressed object A may be pressed at the protrusion 111.

The through-hole 112 may be maintained in a low-pressure state so that the pressed object is tightly attached. The through-hole 112 may be defined to pass through the protrusion 111. The through-hole 112 may be provided in plurality along the circumferential direction of the top surface 114 of the die 11. The through-hole 112 may be connected to a device that adjusts a pressure so that the pressure is adjusted.

If an upper end of the protrusion 111 is provided to be rounded, the pressed object A may not be stably seated on the protrusion 111. In order to improve this state, the through-hole 112 may be defined in a portion of the protrusion 111 so that the pressed object A is well seated through the pressure adjustment.

The stripper 12 may press the pressed object A. The stripper 12 may face the die 11 to press the pressed object A. The stripper 12 may press the pressed object A together with the die 11 by receiving a pressure from a cylinder or the like from an upper side. A recess 121 may be defined in the stripper 12. The stripper 12 may be disposed to surround the punch 13 of the forming apparatus 10. The stripper 12 may have a flat bottom surface. A portion corresponding to the protrusion 111 may also be provided to be flat.

The recess 121 may be defined in a portion corresponding to the protrusion 111. The recess 121 may be defined to be opened to the inside of the stripper 12. The recess 121 has to be opened to the inside of the stripper 12 so that when the pressed object A is pressed, the same shape as the pressed object A in FIG. 3 is provided.

The punch 13 may press the pressed object A. The punch 13 may be disposed inside the stripper 12 to press the pressed object A. The punch 13 may be disposed inside the protrusion 111 to press the pressed object A. A forming space 113 may be defined in the die 11. The punch 13 may be inserted into the forming space 113. The pressed object A is pressed in the forming space 113. The forming space may be a space passing or recessed downward from the top surface of the die 11.

In the forming apparatus 10 according to Embodiment 1 of the present invention, the punch 13 may be fixed, the die 11 and the stripper 12 may ascend together, and the pressed object A may be pressed by the punch 13. However, the present invention is not limited thereto, and it is possible for the die 11 and the stripper 12 are fixed, and the punch 13 descends to press the pressed object A.

The forming apparatus 10 according to Embodiment 1 of the present invention may further include a driving part 14. The driving part 14 may be provided to transmit force to the die 11 so that the die 11 move vertically.

The pressed object A pressed by the forming apparatus 10 according to Embodiment 1 of the present invention may include a first area A1, a second area A2, and a third area A3, which will be pressed. The pressed object A may be a pouch film. The pouch film includes a first resin layer defining a top surface, a second resin layer defining a bottom surface, and a metal layer disposed between the first resin layer and the second resin layer.

The first area A1 is a portion that is pressed and fixed by the die 11 and the stripper 12. The pressed object A may be fixed on the first area A1 so as to be stretched on the second area A2 and the third area A3. A degree of stretching may be less on the first area A1 than on each of the second area A2 and the third area A3.

The second area A2 is a portion at which the stretching occurs at a portion corresponding to the protrusion 111 and the recess 121 of the die 11. That is, the second area A2 is a part pressed by the protrusion 111.

The third area A3 is a portion that is pressed by a lower edge of the punch 13 so as to be stretched in the forming space 113. Since the stretching occurs on both the second area A2 and the third area A3, the stretched portion may be dispersed. Since the stretched portion is dispersed, a remaining thickness of each portion on the second area A2 and the third area A3 is prevented from being excessively reduced.

The forming apparatus 10 according to Embodiment 1 of the present invention includes a die 11 including the protrusion 111 and the stripper 12 in which a recess 121 is defined. Thus, the area on which the pressed object A is pressed and stretched may increase to prevent the pressed object A from becoming thinner at a specific portion. Since it is possible to prevent the thickness from becoming thinner, there is an effect of forming the pressed object A deeper compared to the conventional method.

### Embodiment 2

Hereinafter, a forming system according to Embodiment 2 of the present invention will be described in detail with reference to FIGS. 3 to 5.

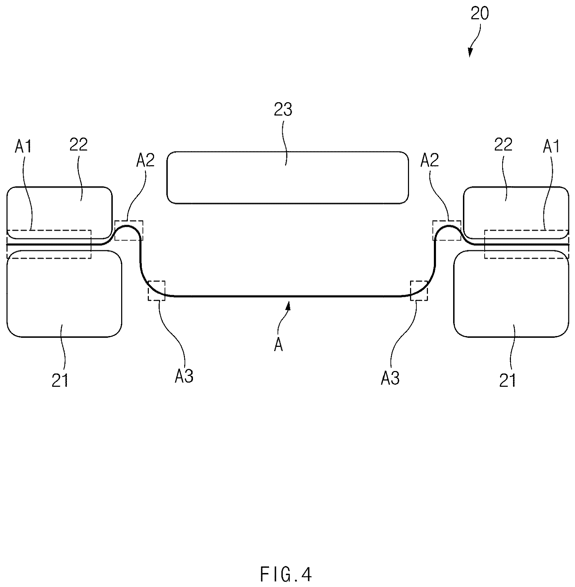

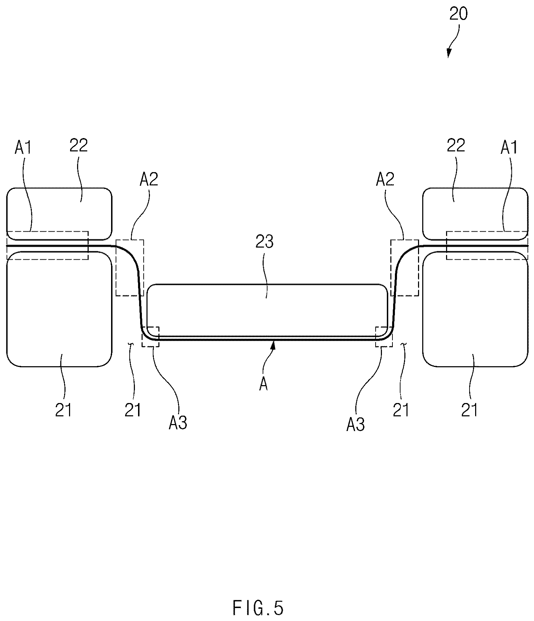

FIG. 3 is a schematic view illustrating a state in which the object to be pressed is pressed by the punch illustrated in FIG. 1, FIG. 4 is a schematic view illustrating a second forming apparatus of a forming system according to Embodiment 2 of the present invention, and FIG. 5 is a schematic view illustrating a state in which an object to be pressed is pressed by a second punch.

The forming system according to Embodiment 2 of the present invention may include a first forming apparatus 10 and a second forming apparatus 20. The pressed object A may be pressed using the first forming apparatus 10 and the second forming apparatus 20. In the forming system according to Embodiment 2 of the present invention, the first forming apparatus 10 has the same configuration as the forming apparatus 10 according to Embodiment 1 of the present invention. Thus, the first forming apparatus 10 and the configuration included in the first forming apparatus 10 are cited from the configuration of the forming apparatus 10 according to Embodiment 1 of the present invention. In addition, for convenience of explanation, hereinafter, the die 11, the stripper 12, and the punch 13 included in the first forming apparatus 10 are referred to as the first die 11, the first stripper 12, and the first punch 13, respectively.

The second forming apparatus 20 may include a second stripper 22, a second die 21, and a second punch 23. The second forming apparatus 20 may secondarily press the pressed object A pressed by the first forming apparatus 10.

In the case of the secondary pressing, the first area A1 of the pressed object A may be pressed and fixed by the second die 21 and the second stripper 22. A shape of the second area A2 may be deformed by the second punch 23 and may be pressed in a direction of the second punch 23.

The second die 21 may press the pressed object A. The second stripper 22 and the first area A1 of the pressed object A may be pressed. A top surface of the second die 21 may be provided to be flat.

The second stripper 22 and the second die 21 may press and fix the pressed object A by facing each other. A bottom surface of the second stripper 22 facing the second die 21 may be provided to be flat.

The second punch 23 may be provided to further press the pressed object A pressed by the first forming apparatus. The second punch 23 may press the third area A3 while pressing the pressed object A. The second punch 23 may press the second area A2 of the pressed object A. Here, a sufficient clearance between the second punch 23, the second die 21, and the second stripper 22 may be secured. The second punch 23 may be provided to be longer in width than that of the first punch 13.

In a process of primarily forming the pressed object A, the second area A2 may be stretched while being pressed by the protrusion 111. As the stretching occurs on both the second area A2 and the third area A3, a thickness of each of the second area A2 and the third area A3 may become thinner than when the stretching occurs only on the third area A3. Therefore, in the process of secondarily forming the pressed object A, the shape may be deformed by the second punch 23. That is, the pressed object A may be formed deeper downward without further reducing the remaining thickness of the pressed object A.

As seen in FIG. 5, as the primarily pressed second area A2 is pressed by the second punch 23, the second area A2 may be expanded to a middle height of the second die 21.

The forming system according to Embodiment 2 of the present invention includes a first forming apparatus 10 and a second forming apparatus 20. In the existing forming process, the pressed object is pressed only once, and the stretching is concentrated to a portion at which the punch presses the pressed object. Therefore, a thickness of the pressed object on the area on which the stretching is concentrated becomes thinner, resulting in a phenomenon in which a residual rate of the pressed object decreases after the pressing process. Thus, there are problems that cracks occur on the stretched area of the pressed object, an electrolyte leaks, and insulation resistance decreases.

In order to solve this problem, in Embodiment 2 of the present invention, the pressed object A may be pressed with the first forming apparatus 10 and then pressed once more through the second forming apparatus 20, so that it has an effect of increasing in residual rate of the pressed object A by increasing in area of the pressed object A, which is stretched, compared to the existing method. Since the residual rate of the pressed object A increases, there is also an effect of being able to form the pressed object A so as to have a deeper shape compared to the conventional method.

### Embodiment 3

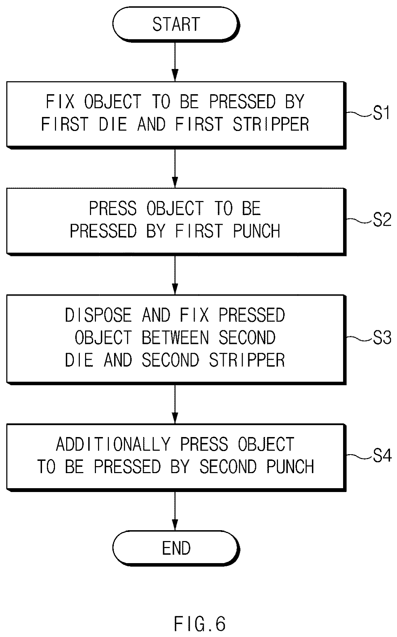

Hereinafter, the forming method will be described in detail with reference to FIG. 6.

FIG. 6 is a flowchart illustrating a forming method according to Embodiment 3 of the present invention.

Hereinafter, a forming method performed by the forming system according to Embodiment 2 described above will be described as Embodiment 3 of the present invention.

Referring to FIG. 6, the forming method according to the present invention may include a process (S1) of fixing the pressed object A by the first die 11 and the first stripper 12, a process (S2) of pressing the pressed object by the first punch 13, a process (S3) of disposing and fixing the pressed object A between the second die 21 and the second stripper 22, and a process (S4) of additionally pressing the pressed object A by the second punch 23.

In the process (S1) of fixing the pressed object A by the first die 11 and the first stripper 12, the pressed object A may be disposed in the forming system. After disposing the pressed object A, the first die 11 may ascend by the driving part 14 to press the pressed object A together with the first stripper 12. Here, the first die 11 and the first stripper 12 may press and fix the first area A1 of the pressed object A.

In the process (S2) in which the pressed object A is pressed by the first punch 13, the first die 11 and the first stripper 12 may further ascend by the driving part 14, and the pressed object A may be pressed by the first punch 13. In particular, the second area A2 may be pressed by the protrusion 111. The third area A3 may be pressed by a lower edge of the first punch 13. However, it is not limited thereto, and the first punch 13 may descend to press the pressed object A.

In the process of disposing the pressed object A between the second die 21 and the second stripper 22, the pressed object A that is primarily formed by the first forming apparatus 10 may be disposed in the second forming apparatus 20. Here, the second die 21 and the second stripper 22 may press the first area A1. The second area A2, on which the stretching occurs through the primary forming, may be disposed inside the second die 21 and the second stripper 22, that is, toward the second punch 23.

In the process in which the pressed object A is additionally pressed by the second punch 23, the second die 21 and the second stripper 22 may ascend, and thus, the pressed object A may be pressed by the second punch 23. However, it is not limited thereto, and the second punch 23 may press the pressed object A while descending.

Since the first die 11 includes the protrusion 111 at the innermost side of the top surface 114, the stretched portion may be dispersed as described above in the process (S2) of pressing the pressed object A by the first punch 13. Since the first stripper 12 also has a recess 121 formed in a portion corresponding to the protrusion 111, the pressed object A may be pressed by the protrusion 111 and the recess 121.

While the embodiments of the present invention have been described with reference to the specific embodiments, it will be apparent to those skilled in the art that various changes and modifications may be made without departing from the spirit and scope of the invention as defined in the following claims.

### [Description of the Symbols]

- 10:: Forming apparatus
- 11:: Die
- 111:: Protrusion
- 112:: Through-hole
- 113:: Forming space
- 114:: Top surface
- 12:: Stripper
- 121:: Recess
- 13:: Punch
- 14:: Driving part
- 20:: Second forming apparatus
- 21:: Second die
- 211:: Second forming space
- 22:: Second stripper
- 23:: Second punch
- A:: Pressed object
- A1:: First area
- A2:: Second area
- A3:: Third area

## Claims

1. A forming apparatus comprising:
a die having a top surface provided to press an object to be pressed;
a stripper disposed to face the die so as to press the object to be pressed; and
a punch provided toward an inner side than the stripper to press the object to be pressed,
wherein the die comprises a protrusion disposed at the innermost side of the top surface that presses the object to be pressed.

2. The forming apparatus of claim 1, wherein the stripper is formed with a recess at a portion corresponding to the protrusion.

3. The forming apparatus of claim 2, wherein the recess is opened to the inside of the stripper.

4. The forming apparatus of claim 1, wherein a through-hole passing through the protrusion and maintained in a low-pressure state so that the object to be pressed is tightly attached is defined in the die.

5. The forming apparatus of claim 4, wherein the through-hole is provided in plurality along a circumferential direction of the top surface of the die.

6. The forming apparatus of claim 1, wherein the protrusion is disposed along a circumferential direction of the top surface of the die.

7. The forming apparatus of claim 1, wherein the punch is disposed toward an inner side than the protrusion to press the object to be pressed.

8. The forming apparatus of claim 1, further comprising a driving part configured to transmit force to the die so that the die moves vertically.

9. A forming system comprising a first forming apparatus and a second forming apparatus, which are configured to press an object to be pressed,
wherein the first forming apparatus comprises:
a first die provided to press the object to be pressed;
a first stripper disposed to face the first die so as to press the object to be pressed; and
a first punch disposed toward an inner side than the first stripper to press the object to be pressed,
wherein the first die comprises a protrusion disposed at the innermost side of a top surface of the first die, and
the second forming apparatus comprises:
a second stripper and a second die, which are configured to press the object to be pressed; and
a second punch configured to additionally press the object to be pressed, which is pressed in the first forming apparatus.

10. The forming system of claim 9, wherein the first stripper comprises a recess defined in a portion corresponding to the protrusion.

11. The forming system of claim 9, wherein a through-hole that is maintained in a low-pressure state so that the object to be pressed is tightly attached to the first die is defined in the protrusion.

12. The forming system of claim 9, wherein a top surface of the second die is provided to be flat, and
a bottom surface of the second stripper, which faces the second die, is provided to be flat.

13. The forming system of claim 9, wherein a through-hole that is maintained in a low-pressure state so that the object to be pressed is tightly attached to the die is defined in the protrusion.

14. A forming method comprising:
fixing an object to be pressed by a first die and a first stripper; and
pressing the object to be pressed by a first punch,
wherein the first die comprises a protrusion formed at the innermost side of a top surface, and
the first stripper comprises a recess formed in a portion corresponding to the protrusion.

15. The forming method of claim 14, further comprising:
disposing and fixing the pressed object between a second die and a second stripper; and
additionally pressing the object to be pressed by a second punch.
